# EUROPEAN PATENT APPLICATION

(11) **EP 4 461 520 A1**
(43) Date of publication of application: **13.11.2024**
(21) Application number: 23172912.0
(22) Date of filing: 11.05.2023
(51) Int. Cl.: B29D 99/00, B29C 70/86, B29C 65/48

(54) **METHOD FOR PRODUCING AT LEAST A PART OF A ROOT OF A WIND TURBINE ROTOR BLADE, ROOT OF A WIND TURBINE ROTOR BLADE, AND WIND TURBINE ROTOR BLADE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Method for producing at least a part of a root of a wind turbine rotor blade, wherein at least two precast root segments (1, 2, 3) are arranged next to each other and at least one layer of a reinforcement fabric (12, 13) is arranged at an outside (8) and at an inside (7) of the root segments (1, 2, 3), respectively, which reinforcement layers (12, 13) bridge a gap (6) between two neighbouring root segments (1, 2, 3), whereafter a resin (14) is applied for embedding the reinforcement layers (12, 13) and for filling the gap (6), which resin (14) is cured, wherein for providing a reinforcement means (9) in the final root (11), a preformed reinforcement element (10), which is permeable for the resin (14) and which comprises several fiber mats (15) is arranged in the gap (6) and is embedded in the resin (14) penetrating through the reinforcement element (10).

## Description

The invention refers to a method for producing at least a part of a root of a wind turbine rotor blade, wherein at least two precast root segments are arranged next to each other and at least one layer of a reinforcement fabric is arranged at an outside and at an inside of the root segments, respectively, which reinforcement layers bridge a gap between the root segments, whereafter a resin is applied for embedding the reinforcement layers and for filling the gap, which resin is cured.

A wind turbine rotor blade comprises a root, which is the interface for connecting the blade with the hub of the turbine. There are different ways to produce such a rotor blade. The blade may be produced in a one-shot casting process by using a respective mold, in which all necessary blade building material, usually comprising a number of preform elements for building the blade shell and additional reinforcing fiber layers etc. are arranged, which are finally embedded in an infused resin. The root is also manufactured in this one-shot casting process. Like the shell, also the root is built from a number of prefabricated precast root segments, which are arranged in the mold in a circular form, with additional reinforcement fabric layers being arranged and also embedded in the resin. According to another alternative, two separate half shells are produced, one shell building the upper and one shell building the lower half of the rotor blade. Each shell comprises a half root part, which half root part, again, is composed of several prefabricated precast root segments with the additional reinforcement fabric layers arranged and embedded in the resin. After producing the half shells, the half shells are connected and finally, with further reinforcing fiber mat layers, embedded in another resin.

For building the root, either the complete root or a root part, several precast root segments are arranged in the respective form. Each root segment, as mentioned, is a precast item, which comprises a number of reinforcing fiber mat layers for example made of glass fiber or carbon fiber and possibly a number of core elements etc., which items are all embedded in an appropriate resin. The reinforcement fabric layers are arranged on both, the inside and the outside of the root segments, which segments have a small gap of some millimeters or centimeters. The reinforcement fabric layers bridge the gap. As the gap is filled with the resin, a larger area is developed which solely comprises the resin. It has been found that in this gap area cracks may appear, which cracks can become larger with the time and may extend into the region of the outside or inside of the root segments, where the reinforcement fabric is laminated, which lamination can be deteriorated due to the extending cracks. Further, when a vacuum is applied for the resin infusion, it may happen that the layers of the reinforcement fabric are "sucked" into the gap to a certain extent, so that they are locally moved from their original flat arrangement and are bent to a certain extent in the region in which they engage in the gap. This phenomenon locally changes the reinforcement structure in an unwanted way.

It is therefore an object of the invention to provide an improved production method.

For addressing the object a method for producing at least a part of a root of a wind turbine rotor blade is characterized in that, for providing a reinforcement means in the final root, a preformed reinforcement element, which is permeable for the resin and which comprises several fiber mats is arranged in the gap and is embedded in the resin penetrating through the reinforcement element.

The invention proposes to provide reinforcement means also in the gap. The reinforcement means is a preformed reinforcement element, which is designed to be arranged in the small gap, and which fills the gap to a certain extent. The reinforcement element is permeable for the infused resin also in the gap, so that the reinforcement element is firmly embedded in the finally cured resin.

As the gap according to the invention is no longer filled only with the resin, but to a certain extent also with the embedded reinforcement element, also the gap region is perfectly reinforced, so that no further cracks will occur in the gap, which might also influence the lamination at the outside and at the inside. Further, due to the arrangement of the reinforcement element in the gap, also the tendency of the outer and inner reinforcement fiber layers to be sucked in the gap is significantly reduced respectively no longer present, as the space between the root segments is filled by the reinforcement element, and as the flow conditions of the resin in the gap during the infusion is significantly changed by the inserted reinforcement element.

The invention therefore provides a method respectively finally a root having a perfect reinforcement also in the critical gap region as well as a perfect outer and inner lamination.

According to a first embodiment, the preformed reinforcement element may comprise several fiber mats fixated to each other. The reinforcement element is a fiber mat stack, comprising two or more fiber mats. The thickness of the stack depends on the dimension of the gap. The fiber mats are fixated to each other usually by means of a polymeric binder, which fixates the respective fibers of the neighbouring mats to each other. The stack structure is still permeable for the resin which is infused afterwards, so that the resin can easily penetrate the fiber stack.

In another embodiment, the reinforcement element may comprise a core element sandwiched between at least two fiber mats arranged at the sides of the core element. In this embodiment, a central core element, which is for example made of a polymer foam, is provided, to which core element at each side at least one fiber mat is arranged and fixated again by means of a polymeric binder. The core element itself is also perforated and therefore permeable for the resin. The fiber mats are arranged at both sides to get in contact with the front surfaces of the neighbouring root segments in order to provide a perfect contact, which fiber mat contact does not show any tendency of a delamination after it is embedded in the cured resin.

Both alternatives are advantageous, as they are, due to the respective fixation of the fiber mat stack by the binder respectively the sandwiching of the core element, sufficiently stable to be easily handled. This is important, as the root segments have a length of at least 1 m or more, usually 1,5 m or even more, with a thickness of 6 cm or more, preferably between 8 - 12 cm. Therefore, the gap has pretty large dimensions in terms of length and width. A sufficient stiffness of the preform element therefore allows for an easy handling of the preform element when arranging it in the gap.

The shape of the preformed reinforcement element preferably corresponds to the shape of the neighbouring front surfaces of the root segments bounding the gap. The length of the preformed reinforcement element preferably roughly corresponds to the length of the gap. The same holds true for the height or width of the reinforcement element, so that the reinforcement element almost entirely fills the gap. Preferably, the preformed reinforcement element extends both to the outside and the inside of the root segments. It may be flush with them. This adaption of the dimension of the reinforcement element to the dimension of the gap entirely prevents any reinforcement fiber layer to be sucked in the gap, as any movement in the gap is prevented by the reinforcement element which supports the fiber layers.

The reinforcement element may be fixated to at least one front surface of one of the root segments bounding the gap. This allows for a perfect positioning of the reinforcement element relative to both front surfaces. The reinforcement element may be fixated to the root segment before the root segment is put in place in the mold or afterwards before the neighbouring root segment is arranged in the mold.

Preferably, the preformed reinforcement element is glued to the front surface. This gluing allows for a simple fixation.

As already mentioned, either the fiber mats of the fiber mat stack making the reinforcement element or the fiber mats arranged at both sides of the central core element are preformed elements, which are produced in advance. The fixation of the fiber mats is realized by using a polymeric binder. For gluing the reinforcement element to the front surface, it is possible that the binder, which fixates the fiber mats or the fiber mats and the core element of the preformed reinforcement element is softened by heating the preformed reinforcement element, wherein the softened and sticky binder fixates the preformed reinforcement element to the front surface. According to this embodiment no further glue is needed but the binder which is already present at the preformed reinforcement element. The reinforcement element is simply heated to a certain extent for slightly softening the binder to finally make it tacky, so that the softened binder adheres to the front surface and sticks to it. The heating may be done by any appropriate heating means like a heat blower or the like.

According to a further embodiment one or more spacer elements are arranged at the front surface of at least one of the root segments bounding the gap, which spacer element or spacer elements contact the front surface of the other root segment, wherein the preformed reinforcement element is arranged around the one or more spacer elements. The spacer elements allow for exactly adjusting the width of the gap and for correctly arranging the root segments relative to each other. When such spacer elements are present, the preformed reinforcement element is provided with appropriate cutouts in which the spacer elements engage respectively are accommodated.

The method allows for producing at least the part of a root of a wind turbine rotor blade. The part of the root may be produced preferably during the production of the rotor blade respectively a rotor blade part. If the rotor blade is produced in a one-shot process, also the complete root is produced according to the inventive method. If the rotor blade is produced by attaching two separate half shells comprising respective halves of the root, each half shell is produced in a one-shot process, wherein also the half root is produced according to the inventive method.

The invention further refers to a root of a wind turbine rotor blade, comprising at least two root segments arranged next to each other, wherein at least one layer of a reinforcement fabric is arranged at an outside and at an inside of the root segments, respectively, which reinforcement layers bridge a gap between the root segments, wherein the reinforcement fabric is embedded in a cured resin which also fills the gap, characterized in that a reinforcement means is arranged in the gap and is embedded in the cured resin.

The reinforcement means may comprise several fiber mat layers or several fiber mat layers and a core element sandwiched between the fiber mat layers penetrated by the resin. The fiber mat layers may also be referred to as fiber mats. The fiber mats have an open structure which is easily penetrated by the resin when the fluid resin is infused. Also, the core element, if provided, is perforated respectively provided with a larger number of openings, so that the resin may penetrate through these openings for firmly embedding also the core element.

The fiber mat layers, if solely a fiber mat layer stack is used, or the fiber mat layers and the core element sandwiched between them, may be part of a prefabricated preform element. This prefabricated preform element is arranged in the gap before the resin infusion is performed, so that this preform element builds the reinforcement means finally present in the root.

The shape of the reinforcement means preferably corresponds to the shape of neighbouring front surfaces of the root segments bounding the gap. The reinforcement means respectively the fiber mat layers and, if provided, the core element therefore almost entirely corresponds to the length and the height of the gap.

Preferably, the reinforcement means extends both to the outside and the inside of the root segments. The ends of the reinforcement means may preferably be flush with these outside and inside segment surfaces, so that the bridging reinforcement fiber layers arranged at the outside and at the inside, respectively, are held in place by the reinforcement means during the infusion process.

Furthermore, one or more spacer elements are arranged at a front surface of at least one of the root segments bounding the gap, which spacer element or spacer elements contact the front surface of the other root segment, wherein the reinforcement means is arranged around the one or more spacer elements.

Finally, the invention refers to a wind turbine blade comprising a root as described above.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: is a principle sketch of the arrangement of several root segments and a preformed reinforcement element to be arranged in the gap between two root segments,
- Fig. 2: is a principle sketch of a finally built root part showing two neighbouring root segments with the gap between them in which a reinforcement means is arranged,
- Fig. 3: shows a principle sketch of a preformed reinforcement element according to a first embodiment in an exploded view,
- Fig. 4: shows a principle sketch of a preformed reinforcement element according to a second embodiment in an exploded view,
- Fig. 5: shows a principle sketch of a fixation of a preformed reinforcement element at a front surface of a precast root segment, and
- Fig. 6: shows a principle sketch of two root segments with one root segment being provided with a spacer element.

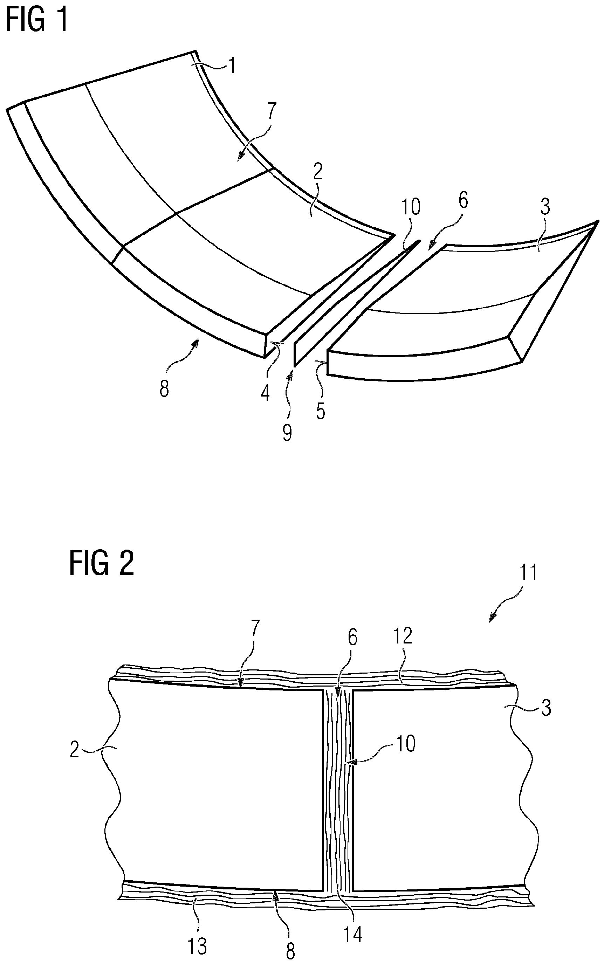

Fig. 1 shows a principle sketch of the arrangement of several root segments 1, 2, 3 which root segments finally built the root of a wind turbine blade. The illustrated three root elements 1, 2, 3 are only an example. The number of root segments building the root or the root part may be smaller or larger. Each root segment 1, 2, 3 is a precast root segment.

An example of such a precast root segment is disclosed in EP 2 400 147 A1, to which it is explicitly referred.

Each precast root segment 1, 2, 3 has a length of at least 1 m, preferably more. A typical length is for example between 1,5 - 2 m. The slightly bent precast root segment 1, 2, 3 has a comparable width of 1 m or more. The height is usually between 10 - 35 cm. It comprises a certain number of stacked fiber mats for example made of glass or carbon or aramid. The fiber mats, together with core elements if needed, are all embedded in a cured resin, which resin builds a matrix. Each root segment 1, 2, 3 has a weight of for example 200 - 350 kg, depending on its dimension.

The mold is provided with first reinforcement fiber layers 13, whereafter the root segments 1, 2, 3 are placed in the mold, followed by the arrangement of second reinforcement fiber layers 12, see figure 2 showing a finally casted root 11. The root segments 1, 2, 3 are arranged in a mold for embedding them together with layers of reinforcement fibers 12, 13 in an appropriate resin 14 for building the final root or root part of the blade respectively the whole blade. For fixating neighbouring root segments 1, 2, 3 with each other they are for example provided with respective holes at their neighbouring front surfaces 4, 5, into which holes respective connection means like bolts or the like are arranged.

When being arranged in the mold, between two neighbouring roots segments 1, 2, 3 a certain small gap 6 is given, which gap has a width of several millimeters up to some centimeters. The gap in fig. 1 is shown very much wider than in reality for illustrative purpose. Also, this gap is finally filled with the infused resin.

In order to prevent deformation of cracks or the like in the cured resin material present in the gap 6 and to avoid that any reinforcement fabric layers which are arranged on the inside 7 and the outside 8 of the root segments 1, 2, 3, respectively, bridging the gap 6, a reinforcement means 9 in form of a preformed reinforcement element 10 is arranged in the gap. The geometry of this reinforcement element preferably corresponds to the shape of the gap bounding front surfaces 4, 5 as shown in fig. 1.

When all root segments 1, 2, 3 are arranged in the mold, together with layers of reinforcement fibers 12, 13 arranged on the outside 8 and on the inside 7 of the whole root segment arrangement (see figure 2), and when all reinforcement elements 10 are arranged in the gaps 6, resin in infused for embedding the reinforcement fabric layers 12, 13 in a resin matrix and for filling the gap 6 with the resin 14, thereby embedding also the reinforcement element 10. The reinforcement element 10 is permeable for the liquid resin 14, so that the resin 14 can penetrate through the reinforcement element 10 and firmly embed it in the cured resin matrix.

Fig. 2 shows a principle sketch of a finally built root 11, for example showing the root segments 2, 3 from fig. 1. As mentioned, on the inside 7 of the root segment arrangement and on the outside 8 several layers of a reinforcement fabric 12, 13 are arranged. These layers may for example be made of glass fiber or carbon fiber or aramid fiber mats. As fig. 2 shows, the reinforcement fabric 12 bridges the gap 6.

In the gap 6 the preformed reinforcement element 10 is arranged, which in this embodiment comprises a number of fiber mats, for example glass or carbon or aramid fiber mats, which were previously stacked and fixated to each other, thereby building a preformed reinforcement element. The preformed reinforcement element 10 is as shown in fig. 2 firmly and completely embedded in the resin 14, which is finally infused and which also embeds the reinforcement fabric 12, 13.

As fig. 2 shows, the reinforcement element 10 has a height which corresponds to the height of the gap 6. It therefore is almost flush with the surfaces of the inside 7 and the outside 8. Therefore, the reinforcement fabric 12, 13 is supported by the reinforcement element 10, which support prevents any sucking or drawing of the reinforcement fabric 12, 13 into the gap 6 during the infusion process. Already the arrangement of the reinforcement element 10 in the gap 6 almost entirely prevents any such sucking or drawing, as the flow of the liquid resin through the gap 6 is positively influenced so that no sucking action occurs.

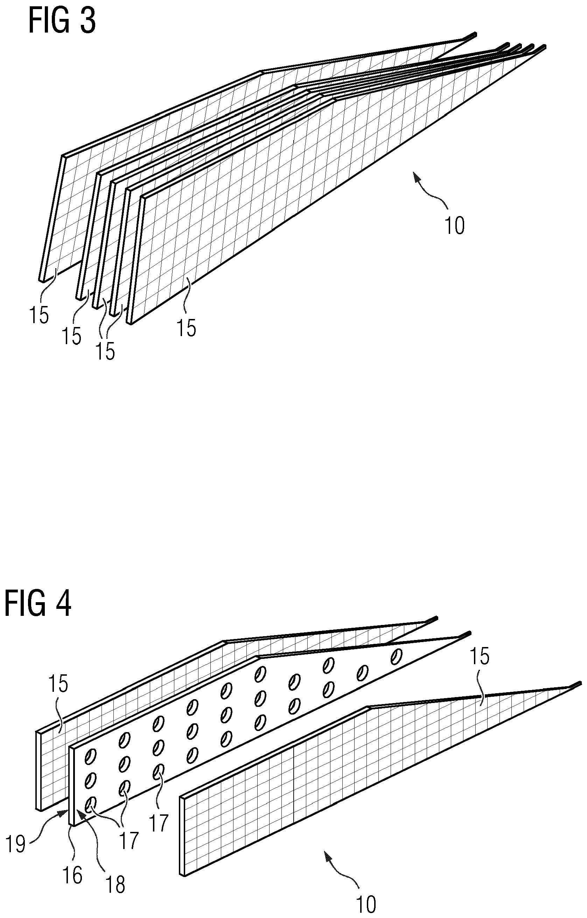

Fig. 3 shows a principle sketch of a reinforcement element 10 of a first embodiment in an exploded view. The reinforcement element 10 comprises several fiber mats 15. They are cut to have a shape which corresponds to the shape of the front surfaces 4, 5.

Each fiber mat 15 has a typical open structure, so that the final mat stack is permeable for the liquid resin.

All fiber mats 15 are stacked and are fixated to each other. This is realized by using a polymeric binder, which for example adheres to the fibers of the fiber mats 15. The polymeric biner is activated by simply heating the stack, so that the binder melts and wettens all neighbouring fibers. After cooling it and curing the binder, a sufficiently fixated and stiff preform reinforcement element 10 is produced. This stiff reinforcement element 10 is easy to handle for arranging it in the gap 6 respectively attaching it to a front surface 4 or 5 as will be explained later.

Fig. 4 shows an embodiment of a second alternative of an inventive reinforcement element 10. This reinforcement element 10 comprises a central core element 16 which for example is made of a polymer foam or balsa wood or the like. It is a stiff item. The core element 16 is perforated by a larger number of holes or openings 17, which make it permeable and allow the penetration of the liquid resin 14.

As fig. 4 shows, a fiber mat 15 is fixated, preferably glued, to each side 18, 19 of the core element 16. This may, again, be realized by means of a polymeric binder, which adheres to the fiber mats 15, and which is simply activated by heating the arrangement, so that the polymeric binder melts and gets tacky. It sticks and glues to the respective side 18, 19. Alternatively a separate glue may be used. The fiber mats 15 provide a three-dimensional grid-like surface of the final reinforcement element, which surface connects to their respective front surfaces 4, 5 of the neighbouring root segments. This is advantageous to avoid delamination.

Also, the reinforcement element 10 according to fig. 4 is a sufficiently stiff element which is easy to be handled and inserted in the gap 6.

While the reinforcement element 10 of fig. 3 is preferably used for smaller gaps 6 having a width of for example 3 - 10 mm, the reinforcement element 10 according to fig. 4 may be used for larger gaps having a width of more than one centimeter.

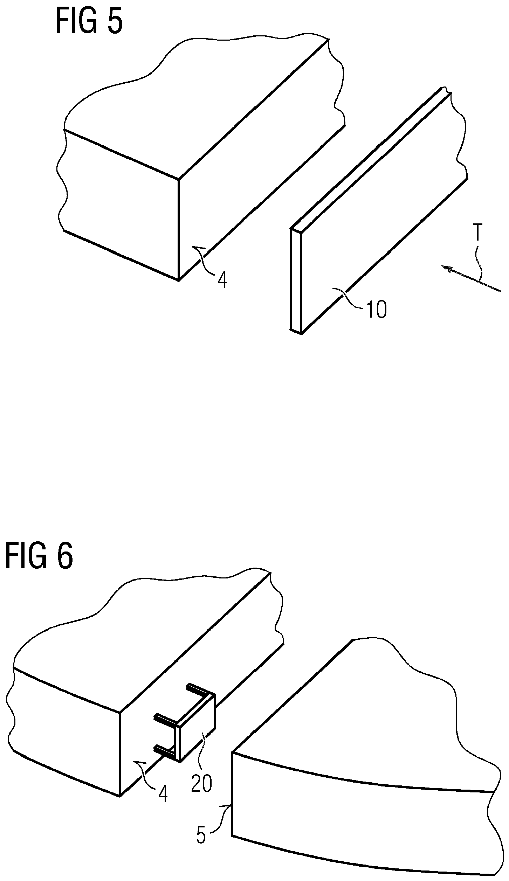

When arranging the root segments 1, 2, 3 in the mold and also arranging the reinforcement elements 10 in the respective gaps 6, it is advantageous to fixate the preformed reinforcement element 10 at one of the gap bounding front surfaces 4 or 5. This can be done before the respective root segment is arranged in the mold. As mentioned, the reinforcement element 10, either according to fig. 3 or fig. 4, comprises a cured polymeric binder which fixates the fiber mats 15. This binder can be used for gluing the reinforcement element to the respective front surface 4, 5. It is only necessary to simply heat the reinforcement element 10, as shown in fig. 5 by the arrow marked with T. The polymeric binder softens to a certain extent and gets tacky, so that it sticks to the front surface 4, as shown in fig. 5. It is pressed against the front surface 4, whereafter the polymeric binder is cooled again, thereby also firmly connecting to the front surface 4.

Fig. 6 finally shows the arrangement of a spacer element 20 to one of the front surfaces, here the front surface 4. The spacer element 20 provides for a defined gap width, as it abuts or connects to the neighbouring front surface 5. Over the front surface area several of the spacer elements 20 may be distributed, so that a constant gap width is given along the whole gap 6.

When such spacer elements 20 are provided, the reinforcement element 10, no matter which embodiment is used, is provided with respective cutouts, into which the respective reinforcement elements engage, so that the reinforcement element is arranged around the spacer elements 20.

The preformed reinforcement elements 10 can be produced in advance, as they are produced separately as separate preformed items. The preformed reinforcement elements 10 are sufficiently stiff respectively rigid and are therefore easy to handle during their arrangement respectively the manufacturing process.

The preform reinforcement elements may also be stored in respective vacuum bags, in which they may also be manufactured, so that they are well-protected while they are stored for their final use. They also already provide the respective glue for attaching them to the root segments in form of the polymeric binder used for fixing the fiber mat stack or the fiber mats, which binder is simply reactivated by heating, so that the reinforcement element may be glued to the respective root segment. As the preformed reinforcement elements 10 are consolidated, which means that the fiber mat stack is sufficiently pressed for example by means of using a vacuum bag during its manufacturing, the reinforcement element may also be arranged in very small gaps.

The arrangement of such preformed reinforcement elements 10 prevents the formation of any cracks in the resin in the gap between two root segments and also prevents any reinforcement fiber layers arranged at the inside and at the outside of the root segment arrangement from being sucked or drawn into the gap.

The inventive method may be used for producing a full circular root which is built when the whole turbine blade is produced in a one-shot process, or a half circle root which is part of a half blade shell, wherein two half shells are connected to build the final blade.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for producing at least a part of a root of a wind turbine rotor blade, wherein at least two precast root segments (1, 2, 3) are arranged next to each other and at least one layer of a reinforcement fabric (12, 13) is arranged at an outside (8) and at an inside (7) of the root segments (1, 2, 3), respectively, which reinforcement layers (12, 13) bridge a gap (6) between the two neighbouring root segments (1, 2, 3), whereafter a resin (14) is applied for embedding the reinforcement layers (12, 13) and for filling the gap (6), which resin (14) is cured, **characterized in that**, for providing a reinforcement means (9) in the final root (11), a preformed reinforcement element (10), which is permeable for the resin (14) and which comprises several fiber mats (15), is arranged in the gap (6) and is embedded in the resin (14) penetrating through the reinforcement element (10).

2. Method according to claim 1, **characterized in that** the preformed reinforcement element (10) comprises several fiber mats (15) fixated to each other, or that the reinforcement element (10) comprises a core element (16) sandwiched between at least two fiber mats (15) arranged at the sides (18, 19) of the core element (16).

3. Method according to claim 1 or 2, **characterized in that** the shape of the preformed reinforcement element (10) corresponds to the shape of neighbouring front surfaces (4, 5) of the root segments (1, 2, 3) bounding the gap (6) .

4. Method according to one of claims 1 to 3, **characterized in that** the preformed reinforcement element (10) extends both to the outside (8) and the inside (7) of the root segments (1, 2, 3).

5. Method according to one of the preceding claims, **characterized in that** the preformed reinforcement element (10) is fixated to at least one front surface (4, 5) of one of the root segments (1, 2, 3) bounding the gap (6).

6. Method according to one of the preceding claims, **characterized in that** the preformed reinforcement element (10) is glued to the front surface (4, 5).

7. Method according to one of the preceding claims, **characterized in that** a binder, which fixates the fiber mats (15) or the fiber mats (15) and the core element (16) of the preformed reinforcement element (10), is softened by heating the preformed reinforcement element (10), wherein the softened binder fixates the preformed reinforcement element (10) to the front surface (4, 5).

8. Method according to one of the preceding claims, **characterized in that** one or more spacer elements (10) are arranged at a front surface (4, 5) of at least one of the root segments (1, 2, 3) bounding the gap (6), which spacer element (20) or spacer elements (20) contact the front surface (4, 5) of the other root segment, wherein the preformed reinforcement element (10) is arranged around the one or more spacer elements (20).

9. Root of a wind turbine rotor blade, comprising at least two root segments (1, 2, 3) arranged next to each other, wherein at least one layer of a reinforcement fabric (12, 13) is arranged at an outside (8) and at an inside (7) of the root segments (1, 2, 3), respectively, which reinforcement layers (12, 13) bridge a gap (6) between the root segments (1, 2, 3), wherein the reinforcement fabric (12, 13) is embedded in a cured resin (14) which also fills the gap (6), **characterized in that** a reinforcement means (9) is arranged in the gap (6) and is embedded in the cured resin (14).

10. Root according to claim 9, **characterized in that** the reinforcement means (9) comprises several fiber mats (15) or several fiber mats (15) and a core element (16) sandwiched between the fiber mats (15) penetrated by the resin (14).

11. Root according to claim 10, **characterized in that** the fiber mats (15) or the fiber mats (15) and the core element (16) are part of a prefabricated preform element (10).

12. Root according to one of the claims 9 to 11, **characterized in that** the shape of the reinforcement means (9) corresponds to the shape of neighbouring front surfaces (4, 5) of the root segments (1, 2, 3) bounding the gap (6) .

13. Root according to one of the claims 9 to 12, **characterized in that** the reinforcement means (9) extends both to the outside (8) and the inside (7) of the root segments (1, 2, 3).

14. Root according to one of the claims 9 to 13, **characterized in that** one or more spacer elements (20) are arranged at a front surface (4, 5) of at least one of the root segments (1, 2, 3) bounding the gap (6), which spacer element (20) or spacer elements (20) contact the front surface (4, 5) of the other root segment (4, 5), wherein the reinforcement means (9) is arranged around the one or more spacer elements (20).

15. Wind turbine blade comprising a root (11) according to one of the claims 9 to 14.
